# EUROPÄISCHE PATENTSCHRIFT

(11) **EP 0 513 018 B1**
(45) Veröffentlichungstag und Bekanntmachung des Hinweises auf die Patenterteilung: **31.08.1994**
(21) Anmeldenummer: 91901676.6
(22) Anmeldetag: 16.01.1991
(51) Int. Cl.: F15C 3/08, F15C 5/00

(54) **MIKROVENTIL**
MICROVALVE
MICROVANNE

(30) Priorität: 07.02.1990 DE 4003619
(43) Veröffentlichungstag der Anmeldung: 19.11.1992
(73) Patentinhaber: ROBERT BOSCH GMBH, 70442 Stuttgart (DE)
(72) Erfinder: METTNER, Michael, D-7140 Ludwigsburg (DE); GRAUER, Thomas, D-7000 Stuttgart 1 (DE)
(86) Internationale Anmeldenummer: DE9100023
(87) Internationale Veröffentlichungsnummer: WO9112434

(56) Entgegenhaltungen:
- EP-A- 0 250 948
- FR-A- 2 018 598
- US-A- 2 024 183
- US-A- 3 342 198
- US-A- 3 417 813
- US-A- 3 457 933
- US-A- 3 556 119

## Beschreibung

Die Erfindung geht aus von einem Mikroventil nach der Gattung des Hauptanspruchs.

Aus der US-A-3,457,933 ist bereits ein Ventil bekannt, bei dem durch eine piezoelektrisch betätigte Biegezunge ein Fluidstrahl in zwei Kammern gelenkt wird. Dieses Ventil ist jedoch nicht aus Wafern aufgebaut.

Es ist schon ein Mikroventil aus der nicht vorveröffentlichten Patentanmeldung DE-A-39 19 876 bekannt, das in Mehrschichtenstruktur hergestellt ist. Besonders wichtig bei diesem mikromechanischen Ventil ist die statisch druckausgeglichene Bauweise, die im wesentlichen in drei Schichten realisiert ist. Das Fluid strömt bei nichtbetätigtem Mikroventil in einen ringförmigen Raum, dessen Bodenfläche von einer ringförmigen Membran gebildet wird und der nach oben durch das auf dem Ventilsitz aufsitzenden Schließglied abgeschlossen wird. Durch die druckausgeglichene Bauweise des Ventils führt die Vorspannkraft der Membran zu einem dichten Aufsitzen des Schließgliedes am Ventilsitz, so daß die Verbindung zum Auslaßanschluß gesperrt ist. Unterhalb der Ringmembran befindet sich ein abgeschlossener Hohlraum, in dem ein definierter Druck herrscht und an dessen Bodenfläche eine Elektrode aufgebracht ist. Diese Elektrode dient zum elektrostatischen Öffnen des Ventils. Zum Schließen des Ventils wird der elektrostatische Antrieb abgeschaltet, wodurch sich das Schließglied unter dem Einfluß der Rückstellkraft der Ringmembran wieder auf den Ventilsitz legt. Die Funktionsweise dieses Mikroventils erfordert einen komplizierten Aufbau, wobei die Abmessungen der einzelnen Strukturelemente gut aufeinander abgestimmt sein müssen.

Das erfindungsgemäße Mikroventil mit den kennzeichnenden Merkmalen des Hauptanspruchs hat demgegenüber den Vorteil, daß seine Funktionsweise einen statischen Druckausgleich nicht erfordert, wodurch sein Aufbau und in diesem Zusammenhang auch seine Fertigung wesentlich vereinfacht sind. Bei der Herstellung können weitgehend Standardprozesse der Mikromechanik und -elektronik verwendet werden. Besonders vorteilhaft läßt sich das erfindungsgemäße Mikroventil als nicht dichtschließendes Steuerventil einsetzen. Vorteilhaft ist die Steuerung der Flußrichtung des Fluidstroms oder Fluidstrahls mittels einer aus dem Wafer heraustrukturierten Biegezunge, die in Ruhestellung parallel zur Flußrichtung orientiert ist. Vorteilhaft ist auch, daß Mikroventile, z. B. bei der Verwendung als Einspritzventil oder in Servoventilen, unempfindlich gegen Erschütterungen und Verschmutzung sind. Das erfindungsgemäße Mikroventil läßt sich auch mittels eines elektrothermischen Antriebs vorteilhaft betätigen, da aufgrund seiner Kleinheit und der direkten Kühlung durch das durchströmende Fluid eine hohe Schaltdynamik erreichbar ist. Vorteilhaft ist auch, daß bei der Verwendung des Mikroventils kaum Schaltgeräusche auftreten und der Verschleiß sehr gering ist. Als besonderer Vorteil ist außerdem anzusehen, daß sich mehrere Mikroventile auf vielfältige Weise kombinieren lassen, so daß ein großer Durchflußvariationsbereich einfach realisierbar ist.

Durch die in den Unteransprüchen aufgefühtten Maßnahmen sind vorteilhafte Weiterbildungen und Verbesserungen des im Hauptanspruch angegebenen Mikroventils möglich. Besonders vorteilhaft ist es, wenn das Öffnen und Schließen des Ventils hydraulisch erfolgt, indem die der eigentlichen Schließvorrichtung vorgeschaltete Biegezunge die Flußrichtung des Fluidstroms oder Fluidstrahls steuert. Durch den Fluidstrom oder Fluidstrahl selbst baut sich die zur Auslenkung des Schließgliedes erforderliche Druckdifferenz zwischen den beiden Seiten der Membran auf. Es ist also kein vorzugebender Referenzdruck erforderlich. Bei der Orientierung der Biegezunge entgegen der Flußrichtung des Fluidstroms oder Fluidstrahls erweist sich als vorteilhaft, daß die Biegezunge als Wegbegrenzung für das Fluid dient. Bei der Orientierung der Biegezunge in Flußrichtung des Fluidstroms oder Fluidstrahls läßt sich die Biegezunge vorteilhaft als Strahlablenker einsetzen. Besonders vorteilhaft ist, daß sich die Biegezunge elektrisch ansteuerbar auslenken läßt. Dies kann piezoelektrisch oder thermoelektrisch erfolgen. Dazu wird die Biegezunge vorteilhaft in mehreren Schichten aufgebaut. Als besonders günstig erweist sich ein Aufbau in zwei Schichten als piezoelektrischer Bimorph oder aus zwei Schichten mit unterschiedlichem thermischen Ausdehnungskoeffizienten. In diesem Falle ist die Biegezunge nur in eine Richtung auslenkbar. Vorteilhaft ist auch, die Biegezunge in drei Schichten zu realisieren, da sie bei geeignetem Aufbau, z. B. als piezoelektrischer Trimorph, auf einfache Weise in zwei Richtungen auslenkbar ist. Als besonders vorteilhaft erweist es sich, das Mikroventil aus Siliziumwafern und Glaswafern aufzubauen, da man bei der Fertigung die in der Mikromechanik und Mikroelektronik üblichen Verfahren anwenden kann.

Drei Ausführungsbeispiele der Erfindung sind in der Zeichnung dargestellt und in der nachfolgenden Beschreibung näher erläutert.

Es zeigen Figur 1 einen Längsschnitt durch ein Mikroventil, Figur 2 einen Längsschnitt durch ein weiteres Mikroventil und Figur 3 die erste Stufe eines modular aufgebauten Mikroventils.

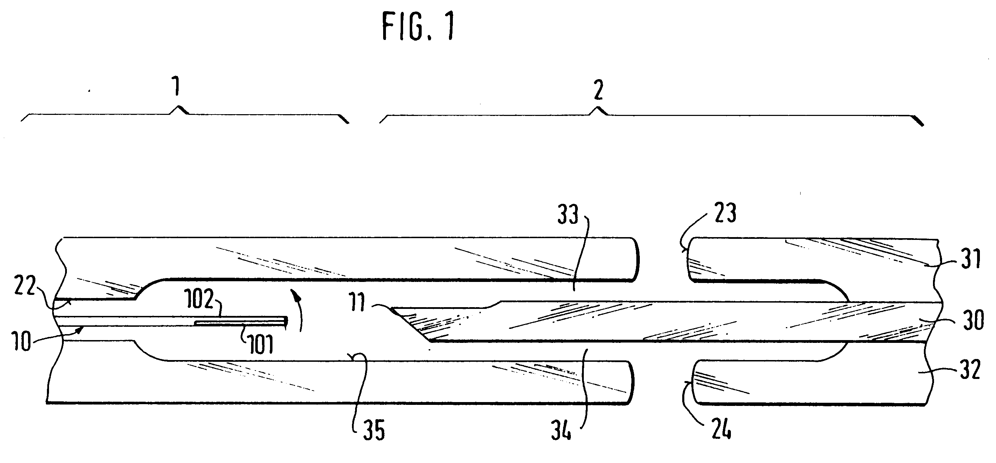

Figur 1 zeigt einen Längsschnitt durch ein Mikroventil in MehrSchichtenstruktur in stark vergrößerter und vereinfachter Darstellung, wobei die einzelnen Schichten aus unterschiedlichen Materialien aufgebaut sind. Für die Herstellung dieser Mehrschichtenstruktur werden Fertigungstechnologien verwendet, wie sie an sich aus der Halbleitertechnologie bekannt sind, insbesondere unter dem Namen Silizium-Technologie, Dünnschicht-Technologie oder Dickschicht-Technologie. Diese Technologien zur Herstellung von bestimmten dreidimensionalen Formen in einer Mehrschichtenstruktur und deren Möglichkeit, durch Strukturdetails bestimmte mechanische Elemente herauszubilden, wird hierbei als bekannt vorausgesetzt.

Das Mikroventil weist im wesentlichen eine erste Abdeckung 31, einen strukturierten Wafer 30 sowie eine zweite Abdeckung 32 auf. Bei dem Wafer 30 kann es sich beispielsweise um einen Siliziumwafer handeln, gegen den die erste und zweite Abdeckung 31 und 32, die z. B. Siliziumwafer oder Glaswafer sein können, gebondet sind. Aufgrund der Strukturierung des Wafers 30 befindet sich in der Schicht zwischen der ersten Abdeckung 31 und der zweiten Abdeckung 32 ein Zulaufanschluß 22. Der Zulaufanschluß 22 mündet in einen Hohlraum 35, der durch zwei Kammern 33 und 34 gebildet wird.

Die beiden Kammern 33 und 34 können z. B. durch Ausnehmungen in der ersten Abdeckung 31 und der zweiten Abdeckung 32 gebildet sein. Als Trennschicht zwischen den beiden Kammern 33, 34 dient der strukturierte Wafer 30. In der ersten Abdeckung 31 befindet sich im Bereich der Kammer 33 mindestens ein Auslaßanschluß 23. In der zweiten Abdeckung 32 befindet sich im Bereich der Kammer 34 mindestens ein Rücklaufanschluß 24. Der die beiden Kammern 33 und 34 trennende strukturierte Wafer 30 weist im wesentlichen zwei Strukturelemente auf, eine Biegezunge 10 und eine keilförmige Spitze 11. Das Fluid strömt durch den Zulaufanschluß 22 entlang der Biegezunge 10 in den Hohlraum 35. Die Biegezunge 10 ist in diesem Beispiel in zwei Schichten 101 und 102 aufgebaut. Die Schicht 101 ist piezoelektrisch oder thermoelektrisch ansteuerbar, wodurch sich die Biegezunge 10 in die durch den Pfeil angedeutete Richtung auslenken läßt. Der Zulaufanschluß 22 und die Biegezunge 10 werden als Stufe 1 bezeichnet. Im Hohlraum 35 dient die Biegezunge 10 als Strahlablenker. Das Fluid kann je nach Stellung der Biegezunge 10 in eine der beiden Kammern 33 oder 34 gelenkt werden. Eine Stufe 2 ist bezüglich der Flußrichtung des Fluids hinter der Stufe 1 angeordnet. Sie besteht in diesem Beispiel im wesentlichen aus einer keilförmig strukturierten Spitze 11 des Siliziumwafers 30, auf die das Fluid trifft. Durch diese Form der Spitze 11 wird die Entstehung von Wirbeln bei der Ablenkung des Fluids weitgehend vermieden. Bei dem dargestellten Mikroventil handelt es sich um ein nicht dichtschließendes Ventil, das beispielsweise als Steuerventil in Servoventilen eingesetzt werden kann.

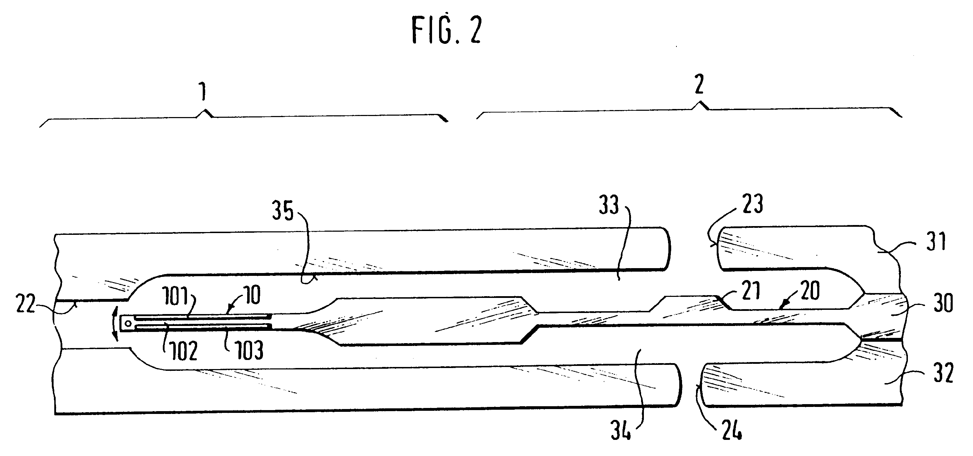

In Figur 2 ist eine andere Ausbildungsform des Mikroventils dargestellt. Die Biegezunge 10 ist hier in drei Schichten 101, 102, 103 ausgebildet. Die beiden äußeren Schichten 101 und 103 sind elektrisch aktivierbare Schichten, z. B. piezoelektrisch oder thermoelektrisch, die mittlere Schicht 102 ist nicht elektrisch ansteuerbar. Die Ansteuerung einer der beiden äußeren Schichten 101 oder 103 führt zu einer Längenänderung der entsprechenden Schicht und dadurch zu einer Verbiegung der Biegezunge 10 in eine der beiden durch den Doppelpfeil angedeuteten Richtungen. Im Gegensatz zu der in Figur 1 dargestellten Ausführungsform des Mikroventils, bei der die Biegezunge 10 in Flußrichtung des Fluids angeordnet ist, ist in Figur 2 eine Biegezunge 10 dargestellt, die entgegen der Flußrichtung des Fluids orientiert ist. Folgt man der Flußrichtung des Fluids, so stößt man zunächst auf die Biegezunge 10, die im Hohlraum 35 angeordnet ist. In ausgelenktem Zustand dient sie als Wegbegrenzung für das Fluid und bestimmt so, inwieweit das Fluid in die Kammern 33 und/oder 34 einströmt. Sie bildet zusammen mit dem Zulaufanschluß 22 die Stufe 1. Die Stufe 2 weist in diesem Beispiel im wesentlichen zwei Strukturelemente auf, eine aus dem Wafer 30 herausstrukturierte Membran 20 und ein Schließglied 21, das sich auf der Membran 20 befindet. Die Membran 20 mit dem Schließglied 21 befindet sich in dem Teil des Hohlraums 35, in dem die erste Abdeckung 31 den Auslaßanschluß 23 aufweist. Die Membran 20 mit dem Schließglied 21 ist bezüglich des Auslaßanschlusses 23 so angeordnet, daß eine geeignete Auslenkung der Membran 20 ein Schließen des Auslaßanschlusses 23 mittels des Schließgliedes 21 bewirkt.

Die Wirkungsweise des Mikroventils wird wie folgt erläutert:

Das durch den Zulaufanschluß 22 in die Stufe 1 des Mikroventils einströmende Fluid wird mit Hilfe der auslenkbaren Biegezunge 10 bevorzugt in eine der beiden Kammern 33 oder 34 geleitet. Durch die Geschwindigkeit des Fluids entsteht zwischen den beiden Kammern 33 und 34 eine Druckdifferenz, die zu einer Auslenkung der Membran 20 führt. Ist die Stellung der Biegezunge 10 so, daß das Fluid in die Kammer 34 einströmt und über den Rücklaufanschluß 24 abgeführt werden soll, so baut sich in der Kammer 34 ein Druck auf, der die Membran 20 so weit auslenkt, daß das Schließglied 21 den Auslaßanschluß 23 dicht verschließt. Läßt der Druck in der Kammer 34 nach, z. B. weil die Biegezunge 10 betätigt wird, so löst sich das Schließglied 21 aus dem Auslaßanschluß 23 automatisch aufgrund der Rückstellkräfte der Membran 20.

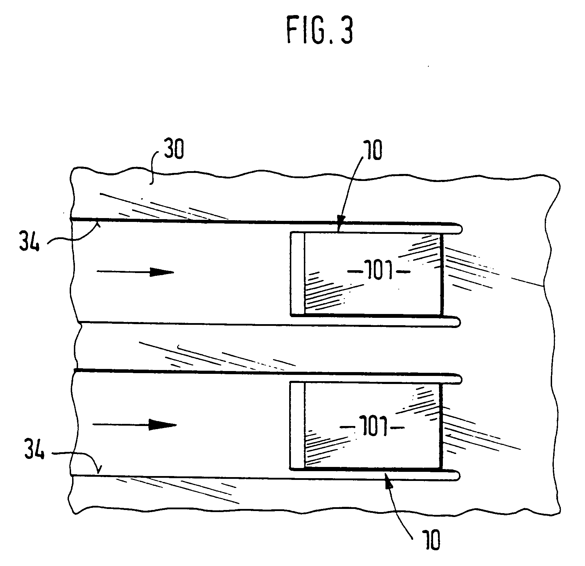

In Figur 3 ist die Aufsicht der Stufe 1 zweier parallel angeordneter Mikroventile dargestellt. Es handelt sich dabei um Mikroventile, deren Biegezungen 10 entgegen der durch die Pfeile angedeuteten Flußrichtung des Fluidstroms oder Fluidstrahls orientiert sind. Die Biegezungen 10 weisen eine elektrisch ansteuerbare Beschichtung 101 auf. Vielfältige Kombinations- und Verschaltungsmöglichkeiten der ersten und der zweiten Stufe mehrerer Mikroventile sind möglich. So können beispielsweise viele Zungen auf eine oder mehrere Membranen wirken. Besonders im Falle von Ventilen, die nur zwei Stellungen: auf/zu realisieren können, kann durch Kombination mehrerer Ventile die den einzelnen Anschlüssen zufließende Fluidmenge durch unterschiedliche Schaltstellung der Einzelventile gesteuert werden.

## Patentansprüche

1. Ventil mit einem Zulauf-Anschluß (22), mindestens einem Rücklauf-Anschluß (24), mindestens einem Auslaß-Anschluß (23) und einem von zwei Kammern (33, 34) gebildeten Hohlraum (35), wobei das Ventil eine erste Stufe (1) aufweist, durch die die Flußrichtung eines durch den Zulauf-Anschluß (22) eintretenden Fluidstroms oder Fluidstrahls in eine der zwei Kammern (33, 34) steuerbar ist, und die Steuerung der Flußrichtung des Fluidstroms oder Fluidstrahls mittels einer Biegezunge (10) erfolgt, die in Ruhestellung parallel zur Flußrichtung des Fluidstroms oder Fluidstrahls orientiert ist, und weiterhin eine zweite Stufe (2) aufweist, die den mindestens einen Auslaß-Anschluß (23) aufweist, wobei die zweite Stufe (2) bezüglich der Flußrichtung des Fluidstroms oder Fluidstrahls hinter der ersten Stufe (1) angeordnet ist, dadurch gekennzeichnet, daß das Ventil als Mikroventil ausgebildet ist, wobei eine Schicht des Mikroventils durch einen strukturierten Wafer (30) gebildet wird, daß der strukturierte Wafer (30) mit einer ersten Abdeckung (31) und einer zweiten Abdeckung (32) verbunden ist, daß der Zulauf-Anschluß (22) mittels Strukturierung des Wafers (30) zwischen der ersten Abdeckung (31) und der zweiten Abdeckung (32) gebildet ist, daß der Zulauf-Anschluß (22) in einen Hohlraum (35) mündet, der durch den strukturierten Wafer (30) in eine erste Kammer (33) und eine zweite Kammer (34) geteilt wird, daß die erste Abdeckung (31) den mindestens einen Auslaß-Anschluß (23) aufweist und daß die zweite Abdeckung (32) den mindestens einen Rücklauf-Anschluß (24) aufweist.

2. Ventil nach Anspruch 1, dadurch gekennzeichnet, daß die zweite Stufe (2) mindestens ein Schließglied (21) aufweist, das durch flächige Strukturierung von Materialschichten hergestellt ist, daß das mindestens eine Schließglied (21) durch eine federnde Membran (20) bewegbar ist, die in eine der Schichten integriert ist, und daß der mindestens eine Auslaß-Anschluß (23) mittels des mindestens einen Schließgliedes (21) verschlossen wird, wenn der Fluidstrom oder Fluidstrahl in eine vorgegebene Kammer der beiden Kammern (33, 34) gesteuert ist.

3. Ventil nach einem der vorhergehenden Ansprüche, dadurch gekennzeichnet, daß die erste Abdeckung (31) mindestens einen Rücklauf-Anschluß (24) aufweist.

4. Ventil nach einem der vorhergehenden Ansprüche, dadurch gekennzeichnet, daß die Biegezunge (10) elektrisch ansteuerbar auslenkbar ist.

5. Ventil nach einem der vorhergehenden Ansprüche, dadurch gekennzeichnet, daß die Biegezunge (10) als piezoelektrischer Bimorph oder als piezoelektrisch Trimorph ausgebildet ist.

6. Ventil nach einem der Ansprüche 1 bis 4, dadurch gekennzeichnet, daß die Biegezunge (10) in Schichten aus Materialien mit unterschiedlichen thermischen Ausdehnungskoeffizienten aufgebaut ist, vorzugsweise unsymmetrisch in mindestens zwei Schichten oder symmetrisch in mindestens drei Schichten und daß die Biegezunge (10) mittels elektrischer Beheizung auslenkbar ist.

7. Ventil nach einem der vorhergehenden Ansprüche, dadurch gekennzeichnet, daß die Biegezunge (10) entgegen der Flußrichtung des Fluidstroms oder Fluidstrahls orientiert ist, so daß der Fluidstrom oder Fluidstrahl zunächst auf die auslenkbare Spitze der Biegezunge (10) trifft, und daß die ausgelenkte Biegezunge (10) als Wegbegrenzung für den Fluidstrom oder Fluidstrahl dient.

8. Ventil nach einem der vorhergehenden Ansprüche, dadurch gekennzeichnet, daß die Biegezunge (10) in Flußrichtung des Fluidstroms oder Fluidstrahls orientiert ist, so daß der Fluidstrom oder Fluidstrahl entlang der Biegezunge (10) geführt wird in Richtung der Spitze (11) und daß die ausgelenkte Biegezunge (10) als Strahlablenker dient.

9. Ventil nach einem der vorhergehenden Ansprüche, dadurch gekennzeichnet, daß der strukturierte Wafer (30) ein Siliziumwafer ist.

10. Ventil nach einem der vorhergehenden Ansprüche, dadurch gekennzeichnet, daß die erste Abdeckung (31) und/oder die zweite Abdeckung (32) strukturiert oder unstrukturiert sind, daß die erste Abdeckung (31) und/oder die zweite Abdeckung (32) aus Silizium und/oder aus Glas sind und daß die erste Abdeckung (31) und die zweite Abdeckung (32) gegen den strukturierten Wafer (30) gebondet sind.

11. Ventil nach einem der vorhergehenden Ansprüche, dadurch gekennzeichnet, daß mehrere gleichartige Mikroventile parallel geschaltet sind.

12. Ventil nach einem der vorhergehenden Ansprüche, dadurch gekennzeichnet, daß mehrere gleichartige erste Stufen (1) auf eine oder mehrere gleichartige zweite Stufen (2) wirken.

## Claims

1. Valve having an inlet connection (22), at least one return connection (24), at least one outlet connection (23) and a cavity (35) formed by two chambers (33, 34), the valve exhibiting a first stage (1), by which the direction of flow of a fluid stream or fluid jet entering through the inlet connection (22) can be directed into one of the two chambers (33, 34) and the directing of the direction of flow of the fluid stream or fluid jet taking place by means of a flexural tongue (10), which in the neutral position is oriented parallel to the direction of flow of the fluid stream or fluid jet, and further exhibiting a second stage (2), which exhibits the at least one outlet connection (23), the second stage (2) being disposed to follow the first stage (1) with respect to the direction of flow of the fluid stream or fluid jet, characterized in that the valve is designed as a microvalve, one layer of the microvalve being formed by a structured wafer (30), in that the structured wafer (30) is connected to a first covering (31) and a second covering (32), in that the inlet connection (22) is formed by means of structuring of the wafer (30) between the first covering (31) and the second covering (32), in that the inlet connection (22) opens into a cavity (35), which is divided by the structured wafer (30) into a first chamber (33) and a second chamber (34), in that the first covering (31) exhibits the at least one outlet connection (23), and in that the second covering (32) exhibits the at least one return connection (24).

2. Valve according to Claim 1, characterized in that the second stage (2) exhibits at least one closing element (21), which is produced by laminar structuring of material layers, in that the at least one closing element (21) is movable by a resilient membrane (20), which is integrated into one of the layers, and in that the at least one outlet connection (23) is closed by means of the at least one closing element (21) when the fluid stream or fluid jet is directed into a predetermined chamber of the two chambers (33, 34).

3. Valve according to one of the preceding claims, characterized in that the first covering (31) exhibits at least one return connection (24).

4. Valve according to one of the preceding claims, characterized in that the flexural tongue (10) can be deflected in an electrically drivable manner.

5. Valve according to one of the preceding claims, characterized in that the flexural tongue (10) is designed as a piezoelectric bimorph or as a piezoelectric trimorph.

6. Valve according to one of Claims 1 to 4, characterized in that the flexural tongue (10) is constructed in layers of materials having differing coefficients of thermal expansion, preferably asymmetrically in at least two layers or symmetrically in at least three layers, and in that the flexural tongue (10) can be deflected by means of electrical heating.

7. Valve according to one of the preceding claims, characterized in that the flexural tongue (10) is oriented against the direction of flow of the fluid stream or fluid jet, so that the fluid stream or fluid jet in the first instance impinges on the deflectable tip of the flexural tongue (10), and in that the deflected flexural tongue (10) serves as path limitation for the fluid stream or fluid jet.

8. Valve according to one of the preceding claims, characterized in that the flexural tongue (10) is oriented in the direction of flow of the fluid stream or fluid jet, so that the fluid stream or fluid jet is guided along the flexural tongue (10) in the direction of the tip (11), and in that the deflected flexural tongue (10) serves as jet deflector.

9. Valve according to one of the preceding claims, characterized in that the structured wafer (30) is a silicon wafer.

10. Valve according to one of the preceding claims, characterized in that the first covering (31) and/or the second covering (32) are structured or unstructured, in that the first covering (31) and/or the second covering (32) are of silicon and/or of glass, and in that the first covering (31) and the second covering (32) are bonded to the structured wafer (30).

11. Valve according to one of the preceding claims, characterized in that a plurality of similar microvalves is connected in parallel.

12. Valve according to one of the preceding claims, characterized in that a plurality of similar first stages (1) acts on one or more similar second stages (2).

## Revendications

1. Vanne comprenant :
- un raccord d'entrée (22), au moins un raccord de retour (24), au moins un raccord de sortie (23) et un volume creux (35) formé de deux chambres (33, 34),
- un premier étage (1) permettant de piloter le courant ou jet de fluide arrivant par le raccord d'entrée (22) de manière à l'amener dans l'une des deux chambres (33, 34), ce pilotage étant assuré par une languette pliable (10) qui, en position de repos, est parallèle à la direction d'écoulement du courant ou du jet de fluide.
- un second étage (2) équipé d'au moins un des raccords de sortie (23) et situé en aval du premier étage, par rapport au sens d'écoulement du fluide, vanne caractérisée en ce que :
- la vanne est une microvanne dont une couche est constituée par une plaquette structurée (30) associée à une première et une seconde couverture (31, 32),
- le raccord d'entrée (22), par l'intermédiaire de la structuration de la plaquette (30), est créé entre la première et la seconde couverture (31, 32) et débouche dans un volume creux (35) que la plaquette structurée (30) divise en une première et une seconde chambre (33, 34),
- la première couverture (31) présente au moins un des raccords de sortie (23) et la seconde couverture (32) présente au moins un des raccords de retour (24).

2. Vanne selon la revendication 1, caractérisée en ce que le second étage (2) comporte au moins un organe de fermeture (21) réalisé dans la structure plate des couches de matière, et mobile sous l'action d'une membrane élastique (20) intégrée à l'une des couches, au moins un raccord de sortie (23) étant obturé par au moins un organe de fermeture (21) lorsque le courant ou jet de fluide est dirigé vers une chambre donnée (33 ou 34).

3. Vanne selon l'une des revendication précédentes, caractérisée en ce que la première couverture (31) comporte au moins un raccord de retour (24)

4. Vanne selon l'une des revendications précédentes, caractérisée en ce que la languette flexible (10) peut être inclinée sous l'action d'une commande électrique.

5. Vanne selon l'une des revendications précédentes, caractérisée en ce que la languette flexible (10) est faite d'un matériau piézo-électrique, dimorphe ou trimorphe.

6. Vanne selon l'une des revendications 1 à 4, caractérisée en ce que la languette flexible (10) est constituée de couches de matériaux à coefficients de dilatation thermique différents, de préférence asymétriques dans au moins deux couches ou symétriques dans au moins trois couches, l'inclinaison de la languette (10) pouvant être obtenue par chauffage électrique.

7. Vanne selon l'une des revendications précédentes, caractérisée en ce que la languette (10) est orientée en sens contraire du courant ou du jet fluide qui vient donc rencontrer d'abord la pointe inclinable de la languette (10) laquelle en position déviée, constitue une limite bordant le courant ou le jet fluide.

8. Vanne selon l'une des revendications précédentes, caractérisée en ce que la languette flexible (10) est orientée selon la direction du courant ou du jet de fluide, de sorte que celui-ci s'écoule le long de la languette vers la pointe (11), la languette (10) constituant un déviateur de jet.

9. Vanne selon l'une des revendications précédentes, caractérisée en ce que la plaquette structurée (30) est une plaquette de silicium.

10. Vanne selon l'une des revendications précédentes, caractérisée en ce que la première couverture (31) et/ou la deuxième (32) sont faites de silicium et/ou de verre, la première couverture (31) et/ou la deuxième (32) étant soudée(s) à la plaquette structurée (30).

11. Vanne selon l'une des revendications précédentes, caractérisée en ce que plusieurs microvannes analogues sont montées en parallèle.

12. Vanne selon l'une des revendications précédentes, caractérisée en ce que plusieurs premiers étages (1) analogues agissent sur un ou plusieurs seconds étages (2) analogues.
